# EUROPÄISCHE PATENTANMELDUNG

(11) **EP 2 322 897 A1**
(43) Veröffentlichungstag der Anmeldung: **18.05.2011**
(21) Anmeldenummer: 09014095.5
(22) Anmeldetag: 11.11.2009
(51) Int. Cl.: G01B 5/008, G01B 11/00, G01B 5/012

(54) **Optisches und mechanisches Verfahren und Vorrichtung zum Vermessen von Werkstücken**

(71) Anmelder: Battenberg, Günther, 35037 Marburg (DE)
(72) Erfinder: Battenberg, Günther, 35037 Marburg (DE)
(74) Vertreter: Grünecker, Kinkeldey, Stockmair & Schwanhäusser Anwaltssozietät

(57) **Zusammenfassung**

Die vorliegende Erfindung betrifft ein Verfahren zum Vermessen von Werkstücken und eine hierzu geeignete Vorrichtung. Ihr liegt die Aufgabe zugrunde, eine einfach zu handhabende und zu erstellende Vorrichtung und eine zur Durchführung des Verfahrens geeignete Vorrichtung anzugeben, die eine genaue Vermessung eines Werkstücks bei relativ geringem Aufwand ermöglichen. Zur Lösung des verfahrensmäßigen Problems wird mit der vorliegenden Erfindung ein Verfahren zum Vermessen von Werkstücken angegeben, bei dem ein an einem Roboterarm (18) angeordneter Messwertaufnehmer (20) aufgrund von Steuerbefehlen einer Robotersteuerung an einen Referenzpunkt (30, 31, 32) angenähert wird und durch Erfassen von dem Messwertaufnehmer (20) zugeordneten optischen Messwertaufnehmer-Markierungen (22) durch eine optische Verfolgungseinrichtung (4) die Position des Messwertaufnehmers (20) erkannt und die so ermittelte Ist-Position des Messwertaufnehmers (20) mit hinterlegten Soll-Referenzpunktkoordinaten zu dem Referenzpunkt (30, 31) verglichen werden und daraus in einem Prozessor (8) Annäherungskorrekturdaten ermittelt werden, aufgrund derer Steuerungskorrekturdaten berechnet und an die Robotersteuerung zur lagegenauen Annäherung des Messwertaufnehmers (20) an den Referenzpunkt (30, 31) weitergeleitet werden. Die erfindungsgemäße Vorrichtung hat einen Roboter (2), an dessen Roboterarm (18) ein Messwertaufnehmer (20) sowie mehrere optische Messwertaufnehmer-Markierungen (22) angeordnet sind; eine Robotersteuerung (8) zur Betätigung des Roboterarms (18); eine optische Verfolgungseinrichtung (4), die die optischen Messwertaufnehmer-Markierungen (22) erkennt, und einen Prozessor (8) mit einem Speicher, in dem Lage-Koordinaten zu Referenz- bzw. Messpunkten (30, 31,32) zu dem Werkstück (16) sowie Topographiedaten zur Soll-Topographie des Werkstückes (16) hinterlegt sind und der mit der Robotersteuerung (8) und der Verfolgungseinrichtung (4) zusammenwirkt.

## Beschreibung

Die vorliegende Erfindung betrifft ein Verfahren und eine Vorrichtung zum Vermessen von Werkstücken.

Zur Überprüfung der Maßhaltigkeit von produzierten Bauteilen gegebenenfalls komplexen Bauteilen werden heutzutage üblicherweise Koordinationsmessmaschinen eingesetzt. Dabei handelt es sich üblicherweise um Vorrichtungen, die eine an einer kartesischen Führungseinrichtung gehaltene Messspitze aufweisen. Als kartesische Führungseinrichtung wird hier bei eine solche Führungseinrichtung verstanden, die jeweils lediglich lineare Bewegungen entlang einer Führung zulässt, wobei zumindest drei rechtwinklig zueinander vorgesehene Führungen ausgebildet sind, so dass die Messspitze dreidimensional bewegt werden kann. Der Messspitze ist üblicherweise ein Schalter zugeordnet. Bei Berührung der Messspitze an einen Mess- bzw. Referenzpunkt eines zu vermessenden Bauteils wird dieser Schalter ausgelöst, wenn die Messspitze bereits das zu vermessende Werkstück berührt, die Bewegungseinrichtung allerdings ihre Bewegung fortsetzt. Erst nach dem Schalten des Schalters wird die Bewegung der Bewegungseinrichtung eingestellt.

Bei vorbekannten Vorrichtungen zum Vermessen von Werkstücken, wie sie beispielsweise in DE 10 2006 027 898 B1 beschrieben sind, wird das Werkstück auf einem sehr solide gebauten Tisch gelagert. Dieser Tisch ist üblicherweise gegenüber der Umgebung schwingungsgedämpft vorgesehen, um Relativbewegungen zwischen dem Werkstück und den linearen Führungen für die Tastspitze zu unterdrücken, durch welche die Genauigkeit des Messergebnisses verfälscht werden kann. Die vorbekannten Vorrichtungen zum Vermessen von Werkstücken werden üblicherweise unter laborartigen Bedingungen betrieben, nicht nur um die Vibrationen als Störgrößen auszuschließen, Des weiteren lassen sich mit kartesischen Bewegungseinrichtungen nicht immer sämtliche Bereiche des zu vermessenden Werkstücks erreichen. So kann es nötig sein, für eine vollständige Vermessung des Werkstücks dieses auf dem Tisch zu verlagern, um verschiedene Referenz- bzw. Messpunkte an dem Werkstück mit der Koordinatenmessmaschine anzufahren. Jede Verlagerung des Werkstücks auf dem Tisch erfordert indes eine erneute Kalibrierung, bei welcher bestimmte, in einem Speicher hinterlegte Referenzpunkte eines Werkstücks eingemessen werden müssen, um die Lage des Werkstücks relativ zu der Koordinatenmessmaschine zu erfassen, d.h. die Lage des Werkstücks relativ zu dem Koordinatensystem der Koordinatenmessmaschine zu kalibrieren.

Der vorliegenden Erfindung liegt das Problem zugrunde, ein einfach durchzuführendes Verfahren zum Vermessen von Werkstücken anzugeben, welches zu exakten Messergebnissen führt. Des weiteren will die vorliegende Erfindung eine Vorrichtung zur Durchführung des Verfahrens angeben, die sich kostengünstig ohne Einbußen bei der Messgenauigkeit herstellen lässt und die eine Annäherung eines Messwertaufnehmers an eine Vielzahl von Messbereichen an dem Werkstück erlaubt.

Zur Lösung des verfahrensmäßigen Problems wird mit der vorliegenden Erfindung ein Verfahren mit den Merkmalen von Anspruch 1 vorgeschlagen. Bei diesem erfindungsgemäßen Verfahren wird ein Messwertaufnehmer, welcher an einem Roboterarm angeordnet ist, aufgrund von Steuerbefehlen einer Robotersteuerung an einen Referenzpunkt an dem Werkstück angenähert. Bei dieser Annäherung werden dem Roboterarm zugeordnete Messwertaufnehmer-Markierungen durch eine optische Verfolgungseinrichtung erfasst. Hierdurch wird die Position des Messwertaufnehmers erkannt. Die so ermittelte lst-Position des Messwertaufnehmers wird mit hinterlegten Soll-Referenzpunktkoordinaten zu dem Referenzpunkt verglichen. Ein Prozessor ermittelt aufgrund dieses Vergleiches Annäherungskorrekturdaten, aufgrund derer Steuerungskorrekturdaten berechnet werden, die an die Robotersteuerung zur Lage der genauen Annäherung an den Referenzpunkt weitergeleitet werden.

Üblicherweise werden bei dem erfindungsgemäßen Verfahren im Rahmen der Annäherung des Messwertaufnehmers an den Referenzpunkt kontinuierlich die Ist-Position des Messwertaufnehmers mit den hinterlegten Soll-Referenzkoordinaten verglichen, um eine möglichst feine und genaue Annäherung des Messwertaufnehmers an den tatsächlichen Referenzpunkt zu erlauben. Dabei greift die Robotersteuerung nicht auf hinterlegte Solldaten zu einer Werkstücktopografie zurück, welche der Robotersteuerung Information über die Lage des Referenzpunktes gibt. Vielmehr wird die Annäherung an den Referenzpunkt über die Verfolgungseinrichtung erfasst, so dass ständig eine tatsächliche Überprüfung der Lage des freien Endes des Roboterarmes bzw. des Messwertaufnehmers stattfindet. Die von der Robotersteuerung zunächst vorgegebene Soillage des Messwertaufnehmers wird über die an dem Roboterarm befestigten optischen Markierungen überprüft. Nach lst- und Sollwertabgleich erfolgt eine Korrektur der zunächst vorgegebenen Bewegungsbahn des Roboters zur Annäherung des Messwertaufnehmers an den Referenzpunkt.

Bei dem erfindungsgemäßen Verfahren erfolgt danach eine Bewegungssteuerung des Roboterarms aufgrund von Lageinformationen zur aktuellen Lage jedenfalls des freien Endes des Roboterarms, an dem der Messwertaufnehmer vorgesehen ist, durch optisch erfasste Lageinformationen, welche durch die Verfolgungseinrichtung bereitgestellt wird. Diese optische Lageinformation wird einem Prozessor, in dem zuvor üblicherweise ein Roboterkoordinatensystem und ein Koordinatensystem der Verfolgungseinrichtung, d.h. ein optisches Koordinatensystem eingemessen worden sind, ausgewertet. Durch Vergleich von Koordinaten zu einem hinterlegten Annäherungsweg für den Messwertaufnehmer zu dem Referenzpunkt und dem optisch ermittelten Istwert zu dem Messwertaufnehmer wird die tatsächliche Position des Messwertaufnehmers überprüft und gegebenenfalls korrigiert. Dieser Abgleich findet vorzugsweise iterativ statt, so dass im Zuge der Annäherung des Messwertaufnehmers an den Referenzwert ständig die Bewegung des Roboterarms daraufhin überprüft wird, ob der Messwertaufnehmer auf der gewünschten Bewegungsbahn dem Referenzpunkt angenähert wird.

Die Verwendung eines . Roboters, insbesondere eines Roboters mit Knickarmen, wie beispielsweise eines Sechs-Achs-Knickarmroboters hat den Vorteil, dass der Messwertaufnehmer an sehr unterschiedliche und teilweise verdeckte bzw. an Hinterschneidungen vorgesehene Referenzpunkte angenähert werden kann. Demnach besteht hinsichtlich der Zugänglichkeit von Referenzpunkten an dem zu vermessenden Werkstück bei der Durchführung des erfindungsgemäßen Verfahrens nicht die Einschränkung, welche bei kartesischen Koordinatenmessmaschinen besteht. Des weiteren bietet die Verwendung eines Roboters zur Annäherung des Messwertaufnehmers an das Werkstück den Vorteil, dass der Messwertaufnehmer mit unterschiedlichen Geschwindigkeiten an den Referenzpunkt angenähert werden kann. So wird man üblicherweise die Möglichkeit einer variablen Bewegung des freien Endes des Roboterarmes nutzen, um zunächst den Messwertaufnehmer mit hoher Geschwindigkeit gegebenenfalls bei geringer Genauigkeit in eine Startposition zu verbringen, aus welcher ein Referenzpunkt angefahren werden soll. Hierbei kann zunächst allein auf Lageinformationen zurückgegriffen werden, die unmittelbar der Robotersteuerung zugeleitet werden, ohne dass eine Überprüfung der aktuellen Lage des Roboterarms durch die Verfolgungseinrichtung erfolgt, aufgrund derer eine Korrektur der Roboterarmbewegung durchgeführt werden kann. Erst bei Erreichen der Startposition und zur lagegenauen Annäherung des Messwertaufnehmers an den Referenzpunkt bei verminderter Geschwindigkeit wird die tatsächliche Lage des freien Endes des Roboterarmes, d.h. des Messwertaufnehmers über die optische Verfolgungseinrichtung überprüft und gegebenenfalls angepasst.

Sofern im folgenden zur Erläuterung der Erfindung auf einen Referenzpunkt an dem Werkstück verwiesen wird, kann dieser Referenzpunkt ein Punkt sein, dessen tatsächliche Lage vorbestimmt ist bzw. wird und der zum Kalibrieren angefahren wird, um die Lage des zu vermessenden Werkstückes zunächst exakt zu beschreiben. Der Referenzpunkt kann aber auch ein tatsächlicher Messpunkt sein, an dem eine Überprüfung des Werkstückes auf Maßgenauigkeit erfolgt. Dies setzt regelmäßig voraus, dass in einem Speicher, auf den der Prozessor zurückgreifen kann, eine Solliage des Messpunktes hinterlegt ist und durch Vermessen des Messpunktes eine gegebenenfalls vorhandene Abweichung zwischen dem gemessenen Messpunkt und dem Sollwert zu diesem Messpunkt festgestellt wird.

Das Erreichen des Referenzpunktes wird gemäß einer bevorzugten Weiterbildung der vor liegenden Erfindung durch einen Kraft-Drehmoment-Sensor erkannt, der endseitig an dem Roboterarm vorgesehen ist. Ein solcher in Verbindung mit einem Roboterarm beispielsweise in der EP 1 473 123 beschriebener Sensor bietet die Möglichkeit, das Erreichen eines Referenzpunktes sehr genau zu erkennen. Statt den aus dem Stand der Technik bekannten Tastern besteht bei einem solchen Kraft-Drehmoment-Sensor die Möglichkeit, sehr genau eine Berührung der Oberfläche an dem Referenzpunkt zu ermitteln. Des weiteren kann beispielsweise durch Anfahren des Messwertaufnehmers an den Referenzpunkt aus unterschiedlichen Richtungen die Topografie der Oberfläche in dem Bereich des Messpunktes exakt erfasst werden. Auch besteht die Möglichkeit, über die Tastspitze taktil eine Kontur, gegebenenfalls eine Rauhigkeit an der Oberfläche des Werkstückes zu erfassen. Dabei wird durch den Messwert des Kraft-Drehmoment-Sensors eine Kraft kontrolliert, mit welcher die Tastspitze gegen die Oberfläche des zu messenden Werkstückes anliegt bzw. gegen diese reibt. Über diese Kraft wird bei der Bewegung Tastspitze über den Roboterarm die Bewegung des Roboterarmes gesteuert. Mit dieser kraft- bzw. drehmomentgesteuerten Bewegung des Roboters folgt die Tastspitze dementsprechend der Kontur der Oberfläche des zu vermessenden Werkstücks. Die Bewegung des Roboterarms wird parallel über die Verfolgungseinrichtung erfasst, die aufgrund dieser Information die Lage der Tastspitze beim Abfahren der Oberfläche als Maß für die Kontur der Oberfläche in Zusammenarbeit mit dem Prozessor ermittelt.

Gemäß der bevorzugten Weiterbildung der vorliegenden Erfindung wird durch den Kraft-Drehmoment-Sensor und dessen Messsignal das Erreichen des Referenzpunktes nicht nur erfasst, sondern gleichzeitig ein Stoppsignal für die Robotersteuerung erzeugt, durch welches die Bewegung des Roboterarmes zum Halten kommt. Dieses Vorgehen kann an die Randbedingungen gekoppelt sein, dass sich der Messwertaufnehmer im Bereich des Referenzpunktes befindet.

Vorzugsweise wird der Messwert des Kraft-Drehmoment-Sensors indes bei der gesamten Bewegung des Messwertaufnehmers als Kollisionsschutz verarbeitet. Der beim Zusammenstoß der Tastspitze mit einem Gegenstand von dem Kraft-Drehmoment-Sensor erfasste Messwert wird dabei der Robotersteuerung zugeleitet, die bei Oberschreiten eines Grenzwertes für den Messwert des Kraft-Drehmoment-Sensors die Bewegung des Roboterarmes stoppt, gegebenenfalls den Roboterarm in eine unkritische Position zurückzieht. Dieser Kollisionsschutz kann auch dann wirksam sein, wenn statt einer Tastspitze einen Scanner an dem freien Ende des Roboterarmes vorgesehen ist, der berührungsfrei die Oberfläche eines Werkstückes vermisst. ln diesem Fall dient der Kraft-Drehmoment-Sensor zumindest dem Kollisionsschutz. Er kann aber auch - wie nachfolgend noch näher erläutert wird - zur haptischen Steuerung des Roboters eingesetzt werden, um den Messwertaufnehmer manuell zu einem vorgegebenen Referenzpunkt zu verbringen.

Jedenfalls bei derjenigen Ausführungsform, bei welcher eine Tastspitze, die taktil mit der Oberfläche des zu vermessenden Werkstücks zusammenwirkt, unter Zwischenschaltung des Kraft-Drehmoment-Sensors an dem Roboterarm angeordnet ist, werden bei Erreichen des Referenzpunktes, angezeigt über einen Messwert des Kraft-Drehmoment-Sensors, über die Verfolgungseinrichtung Referenzpunkt-Messkoordinaten ermittelt und abgespeichert. Bei der Anordnung eines optischen Messwertaufnehmers am freien Ende des Roboterarmes werden die Referenzpunk-Messkoordinaten üblicherweise ermittelt durch Überlagern der Lagekoordinaten des Messwertaufnehmers, die über die optische Verfolgungseinrichtung ermittelt werden, und Lageinformationen zu dem Referenzpunkt, die durch den optischen Messwertaufnehmer berührungsfrei erfasst werden. Diese Lageinformationen beziehen sich üblicherweise auf ein Sichtfeld, welches sich zwischen, dem optischen Messwertaufnehmer (z. B. Scanner) und der Oberfläche des zu vermessenden Werkstücks im Bereich des Referenzpunktes erstreckt.

Oblicherweise ist ein zu vermessendes Werkstück hinsichtlich seiner Topografie beschrieben. Diese Beschreibung erfolgt vor dem genauen Vermessen des Werkstücks durch Daten, die üblicherweise bei der CAD-Konstruktion des Werkstücks generiert werden. Zur einfachen Kalibrierung des erfindungsgemäßen Verfahrens werden diese Daten zur Werkstücktopografie genutzt, um die Koordinaten eines Referenzpunktes für die Annäherung des Messwertaufnehmers an den Referenzpunkt zu bestimmen. Bei einer bevorzugten Weiterbildung der vorliegenden Erfindung werden an dem Werkstück optische Werkstück-Markierungen vorgesehen, die von der Verfolgungseinrichtung erfassbar sind und deren Position bzgl. der Werkstücktopografie bekannt ist. Die Lage der Werkstück-Markerungen ist daher in dem Datensatz, der die Werkstücktopografie beschreibt, gekennzeichnet. Mit dieser Referenzierung erkennt die Verfolgungseinrichtung die Ausrichtung des Werkstücks und ermittelt Werkstücklagedaten, mit denen zusammen mit den Referenzpunkt-Topografiekoordinaten erste Soll-Referenzpunkt-Ortskoordinaten ermittelt werden.

Bei einer alternativen Ausgestaltung wird das Werkstück durch einen Werkstückträger gehalten, der mit optischen Werkstückträger-Markierungen versehen ist. Als Werkstückträger in diesem Sinne kann jedes Element verstanden werden, welches das zu vermessende Werkstück hält. Der Werkstückträger kann auch Teil eines zu vermessenden Werkstücks sein. An dem Werkstückträger sind üblicherweise mehrere, in der Regel zumindest vier für die Verfolgungseinrichtung sichtbare optische Werkstückträger-Markierungen vorgesehen, die von der Verfolgungseinrichtung erkannt werden können, um die Lage des Werkstückträgers optisch zu ermitteln. Hierbei werden Werkstückträger-Lagedaten erzeugt und abgespeichert.

Bei beiden Ausführungsformen sind in einem Speicher, auf den der Prozessor zurückgreifen kann, ferner Informationen, die die Daten zur Werkstücktopografie mit den Werkstückträger-Lagedaten verknüpft, hinterlegt, so dass aufgrund der Werkstückträger-Lagedaten bzw. aufgrund von Daten, die die Lage des Werkstücks wiedergeben, in dem Prozessor die Ausrichtung der Werkstücktopografie in einem von dem Werkstück unabhängigen Koordinatensystem ausgegeben werden kann. Dieses Koordinatensystem wird nachfolgend auch als absolutes Koordinatensystem bezeichnet. Dieses absolute Koordinatensystem muss nicht zwingend seinen Ursprung an einem Punkt der Werkstücktopografie haben.

Die zuvor erwähnten Daten zur Werkstücktopografie beschreiben üblicherweise die relevanten Flächen des Werkstücks vollkommen. Sie beschreiben jedenfalls diejenigen Flächen des Werkstücks, auf deren Maßhaltigkeit es für die Überprüfung des Werkstücks ankommt.

Die Weiterbildung nach Anspruch 4 kann im übrigen in Kombination mit der Weiterbildung nach Anspruch 5 verwirklicht werden.

Zur Kalibrierung des Werkstücks, d.h. zum Einrichten der Messvorrichtung und zur groben Justierung werden bei der bevorzugten Weiterbildung der vorliegenden Erfindung zu dem anzufahrenden Referenzpunkt zunächst Referenzpunkt-Topografiekoordinaten ermittelt, die regelmäßig die Lage des Referenzpunktes in dem Koordinatensystem zu der Werkstücktopografie angeben. Mit Werkstück-Lagedaten, die zu dem Werkstückträger in einem Speicher hinterlegt sind, auf den der Prozessor zugreifen kann, und welche die Lage des Werkstücks relativ zu dem Werkstückträger beschreiben, können nach Erkennen der Werkstückträger-Markierungen durch die Verfolgungseinrichtung zu dem Referenzpunkt Soll-Referenzpunktkoordinaten ermittelt werden, die zunächst als erste Soll-Referenzpunktortskoordinaten zur Annäherung des Messwertaufnehmers Gültigkeit haben. Die Soll-Referenzpunktortskoordinaten können in jedem beliebigen Koordinatensystem abgebildet werde. Vorzugsweise werden diese Referenzpunktortskoordinaten in dem absoluten Koordinatensystem referenziert und geben vorzugsweise den genauen Ort des Referenzpunktes in diesem absoluten Koordinatensystem an. Die zuvor beschriebene Ermittlung von Soll-Referenzpunktkoordinaten kann auch aufgrund von Markierungen erfolgen, die an dem Werkstück selbst vorgesehen sind. Da die Lage dieser Werkstück-Markierungen innerhalb der Werkstücktopografie bekannt ist, kann aufgrund der erkannten Werkstück-Markierungen auf die Lage der Werkstücktopografie in dem gewünschten Koordinatensystem geschlossen und aufgrund der Topografiedaten ein oder mehrere Koordinatensätze zu den Referenzpunkten ausgelesen werden.

Mit der beschriebenen bevorzugten Weiterbildung ist zunächst ein einfaches Kalibrieren üblicherweise aufgrund von CAD-Daten zur Werkstücktopografie möglich. Dabei werden üblicherweise bei der Konstruktion des Werkstücks Referenzpunkt-Topografiekoordinaten definiert, die sich an Stellen befinden, an denen beispielsweise eine hohe Maßhaltigkeit gewährleistet werden kann, oder diese erforderlich ist.

Beim praktischen Einsatz des erfindungsgemäßen Verfahrens, insbesondere bei der Überprüfung von unterschiedlichen Werkstücken aus der Fertigung sollen kurze Rüstzeiten ermöglicht werden. Im Hinblick darauf wird vorgeschlagen, zu unterschiedlichen Werkstücken vorgesehene Werkstückträger durch die optischen Werkstückträger-Markierungen zu kodieren. Jeder Werkstückträger weist danach regelmäßig einen Satz von Werkstückträgerkodierungen auf, deren Zuordnung zueinander jeweils eindeutig ausgebildet ist, so dass aufgrund der Erkennung der Werkstückträger-Markierungen durch die Verfolgungseinrichtung bestimmt werden kann, welcher spezifische Werkstückträger in Benutzung ist. Zu den spezifischen Werkstückträgern sind spezifische Werkstücklagendaten in einem Speicher hinterlegt, die die Ausrichtung des auf dem jeweiligen Werkstückträger gehaltenen Werkstücks relativ zu dem Werkstückträger angeben. Mit diesen Werkstücklagedaten und den Referenzpunkt-Topografiekoordinaten, die ebenfalls aus der Datenbank ausgelesen werden, können die ersten Soll-Referenzpunktortskoordinaten auch bei einer Abfolge von unterschiedlichen Werkstücken aufgrund der optischen Erfassung des Werkstückträgers mit der Verfolgungseinrichtung rasch und genau ermittelt werden.

Das zuvor beschriebene Vorgehen erlaubt zwar die Ermittlung von ersten Soll-Referenzpunktortskoordinaten zu dem bzw. den Referenzpunkten. Da aber häufig damit zu rechnen ist, dass die Werkstückträger-Lagedaten und die Werkstücklagedaten die exakte tatsächliche Lage eines Referenzpunktes nur mit einer gewissen, indes für exakte Messungen unzureichende Genauigkeit angeben, werden die zunächst ermittelten Soll-Ortskoordinaten üblicherweise mit gemessenen Referenzpunktkoordinaten verglichen. Regelmäßig werden mehrere Referenzpunkte mit der Tastspitze angefahren. Bei Erreichen des Referenzpunktes mit der Tastspitze wird zu jedem Referenzpunkt ein Satz von tatsächlichen Referenzpunkt-Ortskoordinaten ermittelt. Auch diese tatsächlichen Referenzpunkt-Ortskoordinaten können in jedem beliebigen Koordinatensystem referenziert werden; sie werden indes vorzugsweise in dem absoluten Koordinatensystem referenziert. Durch Vergleich der tatsächlichen Referenzpunktortskoordinaten mit den ersten Soll-Referenzpunkt-Ortskoor-dinaten wird eine lst-Lage des Werkstückes berechnet und es werden diese lst-. Lage kennzeichnende erste lst-Topografiedaten abgespeichert.

Bei der verfeinerten Kalibrierung wird üblicherweise durch eine best-fit-Annäherung die Summe sämtlicher Abweichungen zwischen den ersten Soll-Referenzpunkt-Ortskoordinaten zu den jeweiligen Referenzpunkten und den tatsächlichen Referenzpunkt-Ortskoordinaten minimiert. Aus dieser Minimierung erfolgt die Berechnung der lst-Lage des Werkstückes, welche durch die erste lst-Topografiedaten gekennzeichnet sind.

Das zuvor beschriebene Vorgehen kann iterativ durchgeführt werden, beispielsweise bis ein vorgegebener Grenzwert für die Summe aller Abweichungen zwischen den Soll-Referenzortskoordinaten und den tatsächlichen Referenzortskoordinaten unterschritten wird.

Fallgestaltungen sind denkbar, bei welchen die genaue Lage des Werkstücks relativ zu dem absoluten Koordinatensystem zu ungenau ist. Diese Ungenauigkeit kann beispielsweise durch fehlerhafte Lagerung des Werkstücks auf einem Werkstückträger begründet sein. Mitunter kann es vorkommen, dass Werkstücke mit einem Werkstückträger gehalten werden, zu dem keine Werkstücklagedaten hinterlegt sind. Auch kann es sein, dass Werkstücke als Teil eines komplexen Bauteils vermessen werden, wobei die optischen Werkstückträger-Markierungen händisch auf das komplexe Bauteil aufgebracht werden. Man dann sich vorstellen, dass hierzu händisch die optischen Markierungen an vorbestimmten Punkten eines Fahrzeugs, dessen Karasserieteil vermessen werden soll, aufgebracht werden. Bereits dieses händische Aufbringen der optischen Markierungen kann teilweise zu ungenau sein, als dass durch Einleisen der Markierungen und anhand von dem Fahrzeug zugeordneten Werkstocklagedaten Soll-Referenzpunktortskoordinaten mit der notwendigen Genauigkeit berechnet werden können.

All diesen Schwierigkeiten begegnet eine Weiterbildung der vorliegenden Erfindung, bei welcher zur Kalibrierung ein erster Satz von Referenzpunkt-Messkoordinaten mittels haptischer Führung des Roboters erzeugt wird. Dabei greift der Benutzer der Vorrichtung die Tastspitze. Die manuell auf die Tastspitze aufgebrachten Kräfte werden von dem Kraft-Drehmoment-Sensor erfasst und in Messsignale umgewandelt, die der Robotersteuerung zugeleitet werden, um eine Bewegungssteuerung des Roboterarmes zu bewirken. Mit anderen Worten führt der Benutzer den Roboter kraft- bzw. drehmomentgesteuert entlang einer von dem Benutzer gewünschten Bewegungsbahn zu einem von dem Benutzer identifizierten Referenzpunkt. Diese haptische Steuerung und gegebenenfalls auch Programmierung des Roboterweges ist ausführlich in der auf den Anmelder zurückgehenden EP 1 473 123 A1 beschrieben. Der händisch angenäherte Referenzpunkt ist erreicht, wenn die Tastspitze diesen berührt. Dieser Zustand kann manuell durch den Benutzer quittiert werden. Alternativ kann auch das Messsignal des Kraft-Drehmoment-Sensors herangezogen werden um festzulegen, dass die Tastspitze an dem gewünschten Referenzpunkt anliegt. In diesem Fall wird üblicherweise ein von dem Benutzer an der Steuerung vorgegebener und von der Robotersteuerung zur Bewegung des Roboterarmes erzeugter Hub durchgeführt, mit dem die Tastspitze gegen den Referenzpunkt angelegt wird. Über diese haptische Programmierung können mehrere Referenzpunkte angesteuert und hierzu jeweils Referenzpunkt-Messkoordinaten ermittelt werden. Diese so ermittelten Referenzpunkt-Messkoordinaten werden mit den Referenzpunkt-Topografiekoordinaten, die üblicherweise Teil des hinterlegten Datensatzes zur Werkstücktopografie sind, verglichen. Regelmäßig wird auch bei diesem Vorgehen in einem best-fit-Modus durch Minimierung der mathematischen Abweichungen zwischen den gemessenen Koordinaten und den hinterlegten Koordinaten, insbesondere deren Verhältnis zueinander eine lst-Lage des Werkstückes berechnet. Zu dieser lst-Lage werden erste lst-Topografiedaten abgespeichert.

Nach einmaligem Einlesen der so ermittelten Referenzpunkt-Messkoordinaten und dem Abspeichern einer ersten angenommenen lst-Lage des Werkstücks kann eine weitere Justierung automatisiert erfolgen, in den aus den ersten lst-Topografiedaten erste Soll-Referenzortskoordinaten zu den Referenzpunkten ausgelesen werden, die zum Annähem der Tastspitze Verwendung finden und nach dem Vermessen des Referenzpunktes mit den hierbei ermittelten Referenzpunkt-Messkoordinaten verglichen werden, um nach einem best-fit-Modus zu verschiedenen Referenzpunkten korrigierte lnformationen zu der lst-Lage des Werkstückes zu erhalten,

Üblicherweise reichen zur Kalibrierung der Werkstücklage wenige, regelmäßig drei Messpunkte aus, um bei gegebener hinterlegter Werkstücktopografie die tatsächliche Lage des Werkstücks genaue vorherzubestimmen. Dabei sollten jedenfalls zwei der zu vermessenden Referenzpunkte auf Flächen vorgesehen sein, die in einem substanziellen Winkel relativ zueinander angestellt ausgeformt sind. Als substanzieller Winkel wird insbesondere ein Winkel von zwischen 60° und 90° angesehen.

Das zuvor erwähnte iterative Verfahren zur genaueren Justierung des zu vermessenden Werkstücks in dem maßgeblichen Koordinatensystem (üblicherweise dem absoluten Koordinatensystem) kann jeweils mit den gleichen Referenzpunkten erfolgen. Es ist aber auch möglich, mit jedem Wiederholungsschritt lst-Referenzpunktkoordinaten zu jeweils anderen Referenzpunkten auszulesen. Bei jedem lterationsschritt werden jedenfalls in der Regel lst-Referenzpunktkoordinaten zu verschiedenen Referenzpunkten aus den ersten lst-Topografiedaten berechnet. Die so berechneten lst-Referenzpunktkoordinaten zu den verschiedenen Referenzpunkten werden mit der Tastspitze angefahren. Hierbei werden lst-Referenzpunkt-Messkoordinaten zu jedem Referenzpunkt ermittelt. Durch Vergleich der gemessenen lst-Referenzpunkt-Messkoordinaten mit den zuvor berechneten Ist-Referenzpunktkoordinaten und mathematischen best-fit-Operationen wird eine korrigierte Ist-Lage des Werkstückes berechnet. Zu dieser korrigierten Ist-Lage werden die Ist-Lage kennzeichnende korrigierte Topografiedaten abgespeichert.

Üblicherweise wird jedenfalls einmal automatisiert durch Vergleich von hinterlegten Koordinaten zu unterschiedlichen Referenzpunkten und Vermessen dieser Referenzpunkte bei optisch gesteuerter Bewegung des Roboterarmes und optischen Einlesen der Messpunkte, die Ausrichtung des Werkstückes überprüft. Erst nach dieser Überprüfung wird in der Regel angenommen, dass das Werkstück hinsichtlich seiner Ausrichtung üblicherweise in dem absoluten Koordinatensystem hinreichend genau beschreibbar ist. Wie bereits erwähnt, können mehrere lterafionsschritte durchgeführt werden, bei denen jeweils hinterlegte Daten zu den Referenzpunkten angefahren und diese vermessen werden, um die Ausrichtung des Werkstückes in dem relevanten Koordinatensystem mit hoher Genauigkeit zu beschreiben. Werden entsprechende lterationsschritte durchlaufen, so sind korrigierte Topografiedaten hinterlegt, die die Ausrichtung des Werkstückes und den Verlauf der Oberfläche des Werkstückes mit hoher Genauigkeit angeben. Bei geringeren Anforderungen an die Genauigkeit kann auch mit den ersten lst-Topografiedaten gearbeitet werden, um die Lage und Ausrichtung des Werkstückes zu beschreiben. Aus diesen Topografiedaten werden Soll-Ortskoordinaten eines anzufahrenden Messpunktes ermittelt, welcher zur Ermittlung von Ist-Messpunktortskoordinaten angefahren wird. Das vorherige Einjustieren des zu vermessenden Werkstückes in dem relevanten Koordinatensystem verhindert, dass Abweichungen zwischen den Soll-Ortskoordinaten des Messpunktes und den gemessenen lst-Messpunktortskoordinaten durch eine fehlerhafte Ausrichtung des Werkstückes begründet sind.

Die Messung wird üblicherweise zumindest zweischrittig durchgeführt. Dabei wird zunächst zu einem Mess- bzw. Referenzpunkt aufgrund von hinterlegten Ortskoordinaten eine Startposition ermittelt, die in einem vorbestimmten Abstand zu der Oberfläche des Mess- bzw. Referenzpunktes vorgesehen ist. Der Richtungsvektor zwischen dem Mess- bzw. Referenzpunkt und der Startposition geht üblicherweise rechtwinklig zu der Oberfläche an dem Mess- bzw. Referenzpunkt ab. Mit anderen Worten hat die Startposition einen vorbestimmten Abstand in Normalenrichtung bezogen auf die Oberfläche des Mess- bzw. Referenzpunktes. Die hinterlegten Ortskoordinaten werden aus den ersten lst-Topografiedaten bzw. den korrigierten Topografiedaten ermittelt. Der Messwertfühler, insbesondere die Tastspitze werden zunächst mit einer ersten Geschwindigkeit in die Startposition verbracht. Von dort wird der Messwertfühler mit einer zweiten Geschwindigkeit an den Mess- bzw. Referenzpunkt angenähert. Die erste Geschwindigkeit ist dabei wesentlich höher als die zweite Geschwindigkeit, beispielsweise zwischen 0,5 und 2 mm/Sek. betragen kann. Die erste Geschwindigkeit ist wenigstens um den Faktor 3 größer als die zweite Geschwindigkeit.

Gemäß einer weiteren bevorzugten Ausgestaltung der vorliegenden Erfindung wird beim Vermessen eines Mess- bzw. Referenzpunktes durch die Verfolgungseinrichtung die Lage der optischen Werkstück- bzw. Werkstückträger-Markierungen überwacht, um Bewegungen des Werkstücks zu erkennen. Durch Abgleich zwischen den erkannten Werkstück-Markierungen und den Werkstückträger-Markierung kann eine eventuelle Relativbewegung zwischen Werkstück und Werkstückträger erkannt und kompensiert werden. Dabei ist zu beachten, dass das Werkstück nicht zwingend an dem Werkstückträger festgelegt wird, da eine solche Festlegung mitunter die tatsächliche Werkstücktopografie verändert. Insofern sind Relativbewegungen zwischen Werkstück und Werkstückträger in der Praxis ohne weiteres zu erwarten.

Mit der erkannten Bewegung des Werkstückträgers bzw. des Werkstücks werden in dem Prozessor Annäherungskorrekturdaten übermittelt, aufgrund derer Steuerungskorrekturdaten berechnet und an die Robotersteuerung zur lagegenauen Annäherung an den Referenzpunkt weitergeleitet werden. Die zuvor beschriebene Korrektur von Bewegungenkann insbesondere für den Ausgleich von Vibrationen des Untergrundes von Bedeutung sein. Im Gegensatz zum Stand der Technik ist für die Durchführung des vorliegenden Verfahrens nicht zwingend das Anordnen des Werkstückes auf einem schweren, schwingungsgedämpft gelagerten Tisch notwendig. Vielmehr kann ein Programmbaustein vorgesehen sein, welcher optisch erkannte Schwingungen des Werkstückträgers mathematisch analysiert. Der Verfolgungseinrichtung kann beispielsweise ein Schwingungssensor zugeordnet sein, welcher Bewegungen der Verfolgungseinrichtung analysiert und an den Prozessor weiterleitet. Hierdurch kann beispielsweise eine etwaige Schwingung oder Bewegung der Verfolgungseinrichtung mathematisch eliminiert werden. Die Signale der Verfolgungseinrichtung werden durch mathematische Korrektur in dem Prozessor hierbei vorzugsweise derart verarbeitet, dass von der Verfolgungseinrichtung erkannte Relativbewegungen zwischen der Verfolgungseinrichtung und dem Werkstückträger allein durch tatsächliche Bewegungen des Werkstückträgers begründet sind. Im übrigen können dem Roboter, insbesondere dem ortsfesten Teil des Roboters optische Markierungen zugeordnet sein, die von der Verfolgungseinrichtung überwacht werden, um etwaige Vibrationen des Roboters zu erkennen und mathematisch derart zu eliminieren, dass die Bewegungen, die über die optischen Messwertaufnehmer-Markierungen erkannt werden, allein der gewünschten Bewegung des freien Endes des Roboterarmes insbesondere der Bewegung des Messwertaufnehmers zugeordnet werden können.

Ungeachtet dessen kann der Werkstückträger auch auf einer Bewegungseinrichtung, beispielsweise einem Drehteller vorgesehen sein, um bestimmte Oberflächen des zu vermessenden Werkstücks in bestmöglicher Weise relativ zu dem Messwertaufnehmer anzuordnen. Zwar kann die Bewegung des Drehtellers relativ zu einer Basis des Werkstückträgers messtechnisch ermittelt werden. Bevorzugt wird indes die Bewegung des Werkstücks auf dem Drehteller durch Erkennen der Werkstückträger-Markierungen bzw. der Werkstück-Markierungen zu erfassen und die sich dadurch ergebende Lageänderung der Topografie in dem Prozessor berechnet. Auch kann nicht nur der Werkstückträger bzw. das Werkstück, sondern auch der Drehteller optische Werkstückträger-Markierungen haben, so dass über die Verfolgungseinrichtung die Drehbewegung des Drehtellers relativ zu dem Werkstückträger erfasst und die sich dadurch ergebende Lageänderung der Werkstücktopografie in dem Prozessor berechnet werden kann.

Mit den korrigierten Lageinformationen zu den einzelnen Referenz- bzw. Messpunkten kann dann das Anfahren verschiedener Referenz- oder Messpunkte erfolgen. Üblicherweise wird man bei einer Drehung des Werkstücks auf dem Drehteller zunächst das Werkstück erneut durch Anfahren bestimmter Referenzpunkte einjustieren.

Im Hinblick auf die Lösung des vorrichtungsmäßigen Aspektes wird mit der vorliegenden Erfindung eine Vorrichtung zum Vermessen von Werkstücken vorgeschlagen, die folgende Merkmale umfasst: einen Roboter, an dessen Roboterarm ein Messwertaufnehmer sowie mehrere optische Messwertaufnehmer-Markierungen vorgesehen sind; eine Robotersteuerung zur Betätigung des Roboterarms; eine optische Verfolgungseinrichtung, die die optischen Messwertaufnehmer-Markierungen erkennt und einen Prozessor mit einem Speicher, in dem Lagekoordinaten zu Referenz- bzw. Messpunkten zu dem Werkstück sowie Topografiedaten zur Soll-Topografie des Werkstücks hinterlegbar sind und der mit der Robotersteuerung und der Verfolgungseinrichtung zusammenwirkt. Das Zusammenwirken erfolgt dabei vorzugsweise wie in Anspruch 1 angegeben. Jedenfalls wird die tatsächliche Lage des Messwertaufnehmers über die Verfolgungseinrichtung und anhand der Messwertaufnehmer-Markierungen erfasst und durch Abgleich der tatsächlichen Position des Messwertaufnehmers bei Annäherung an den Referenz- bzw. Messpunkt mit Koordinaten zu einer vorgegebenen Bewegungsbahn zu dem Mess- bzw. Referenzpunkt verglichen. Bei Abweichung wird die Bewegungsbahn des Messwertaufnehmers bei Annäherung an den Mess- bzw. Referenzpunkt korrigiert.

Der Messwertaufnehmer kann vorzugsweise durch eine Tastspitze gebildet sein, die unter Zwischenschaltung eines Kraft-Drehmoment-Sensors an dem freien Ende des Roboterarmes vorgesehen ist. Der Kraft-Drehmoment-Sensor wirkt mit dem Prozessor zusammen, so dass beispielsweise von dem Kraft-Drehmoment-Sensor bei Berührung des Mess- bzw. Referenzpunktes abgegebene Messsignale verarbeitet werden, so dass das Ereignis als Berührung der Tastspitze an dem Mess- bzw. Referenzpunkt bewertet wird. Alternativ kann die Robotersteuerung über den Prozessor auch in einer Weise erfolgen, dass der Roboter an einen gewünschten Mess- bzw. Referenzpunkt angenähert werden kann (haptische Programmierung).

Statt einer Tastspitze kann auch ein Scanner endseitig an dem Roboterarm vorgesehen sein. Wie bereits oben erwähnt, kann dieser Scanner ebenfalls unter Zwischenlage des Kraft-Drehmoment-Sensors vorgesehen sein, so dass das Signal des Kraft-Drehmoment-Sensors bei Annäherung des berührungsfrei arbeitenden Scanners als Kollisionsereignis gewertet wird, in folge dessen die Roboterbewegung zum Stillstand kommt. Das oben beschriebene methodische Vorgehen zum Ermitteln von Referenzpunkten bzw. zum Festellen der Lage des Werkstückes aufgrund von Werkstücklagedaten kann dabei auch genutzt werden, um eine möglichst genaue Positionierung des Scanners zu erreichen. An dem Roboterarm kann hierzu vorzugsweise ein Triangulationssensor vorgesehen sein, der den Abstand zu einer Abstand zu einer Oberfläche messen kann. Mit der hinterlegten Werkstücktopografie und in Kenntnis der genauen Lage des Werkstücks kann anhand von wenigen Messpunkten des Triangulationssensors insbesondere im Bereich der zu vermessenden Fläche der normal zu der zu vermessenden Freiformfläche ausgerichteten Vektor berechnet werden. Selbst wenn der an dem Roboterarm vorgesehene Scanner mittels haptischer Steuerung in den Bereich einer zu vermessenden Oberflächenkontur verbracht wird, kann durch das obige Berechnungsverfahren der Scanner durch die Robotersteuerung final in Normatenrichtung zu der jeweiligen Oberfläche ausgerichtet werden. Diese Ausrichtung des Scanners relativ zu der Lage und Kontur der zu vermessenden Freiformfläche eines Werkstücks führt zu verbesserten, durch den Scanner gewonnenen Messwerten zur tatsächlichen Oberflächentopografie. Die hierbei gewonnenen Werte können wiederum mit Soll-Topografiedaten insbesondere des CAD, verglichen werden.

Die erfindungsgemäße Vorrichtung kann insbesondere insgesamt in einem Container ausgebildet sein, der einen leichten Transport der erfindungsgemäßen Vorrichtung erlaubt. So ist es möglich, durch Verschicken des Containers an eine Produktionsstätte an dieser exakte Werkstückvermessungen zu erlauben, ohne dass dort notwendigerweise das Know-how für den Aufbau und den Betrieb einer entsprechenden Messvorrichtung vorhanden ist. Vielmehr kann das Einrichten und Errichten der Messvorrichtung zentral erfolgen. Der Container sollte zumindest Öffnung haben, die das Einbringen des Werkstücks, vorzugsweise montiert auf dem Werkstückträger erlaubt.

Weitere Einzelheiten und Vorteile der vorliegenden Erfindung ergeben sich aus der nachfolgenden Beschreibung eines Ausführungsbeispiels in Verbindung mit der Zeichnung. ln dieser zeigen:
- Figur 1: die wesentlichen Teile eines Ausführungsbeispiels der erfindungsge- mäßen Vorrichtung:
- Figur 2: eine schematische Darstellung der in Figur 1 gezeigten Komponenten des Ausführungsbeispiels und
- Figuren 3a bis 3f: die wesentlichen Schritte zum Kalibrieren und Einrichten der Messvor richtung sowie Messen eines Messpunktes.

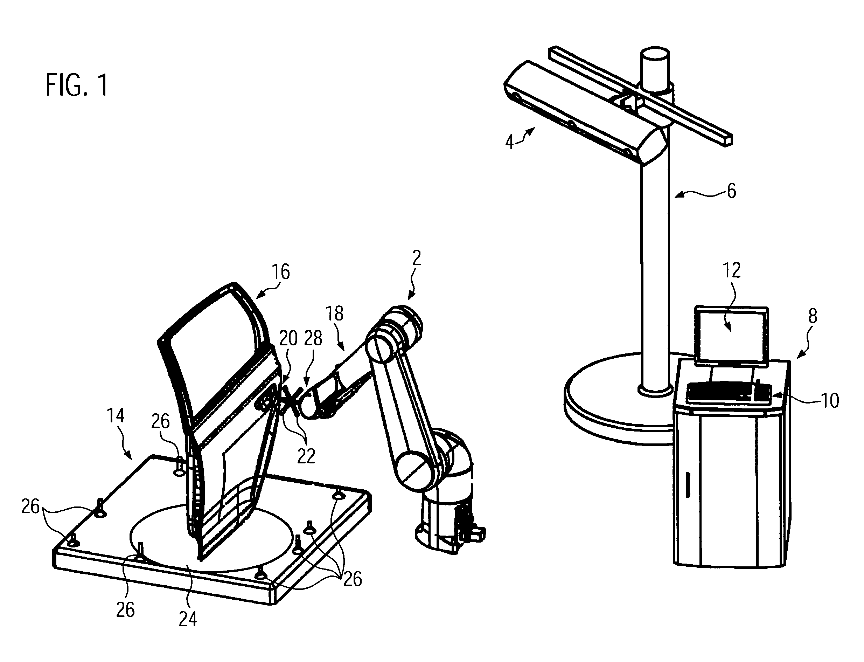

Figur 1 zeigt die wesentlichen Komponenten einer Vorrichtung zum Vermessen von Werkstücken, die als wesentliche Elemente einen Sechs-Achs-Knickarmroboter 2, einen eine Verfolgungseinrichtung 4 ausbildenden optischen Tracker, der erhöht über einen Ständer 6 gehalten ist, sowie einen Prozessor 8 mit Interface 10 und Bildschirm 12 sowie einen Werkstückträger 14 umfasst, auf dem ein, vorliegend als Autotür ausgebildetes Werkstück 16 in vorbestimmter Lage gehalten ist.

Der Roboter 2 hat einen Roboterarm 18, an dessen freiem Ende eine Tastspitze 20 angeordnet ist. Zwischen der Tastspitze 20 und dem freien Ende des Roboterarmes 18 befinden sich optische Messwertaufnehmer-Markierungen 22, von denen vorliegend einige sternförmig zu einer sich parallel zu der Tastspitze 20 vorgesehenen Achse erstrecken und diese umfänglich umgeben. Auf dem Umfang verteilt sind vier Messwertaufnehmer-Markierungen 22 vorgesehen.

Der Werkstückträger 14 umfasst einen Drehteller 24 sowie mehrere Werkstückträger-Markierungen 26. Bei den Messwertaufnehmer-Markierungen 22 und den Werkstückträger-Markierungen 26 handelt es sich vorzugsweise um Leuchtdioden.

Die Messwertaufnehmer-Markierungen 22 sowie die Tastspitze 20 sind bei dem gezeigten Ausführungsbeispiel unter Zwischenlage eines Kraft-Drehmoment-Sensors 28 an das freie Ende des Roboterarmes angeflanscht.

In Figur 1 ist eine Fallgestaltung gezeigt, bei welcher die Autotür 16 als Werkstück auf Maßhaltigkeit überprüft werden soll. Bereits die schematische Darstellung gemäß Figur 1 verdeutlicht, dass das Werkstück 16 einige der Werkstückträger-Markierungen 26 verdeckt, so dass diese von der Verfolgungseinrichtung 4 nicht gesehen werden können. Üblicherweise werden an dem Werkstückträger 14 hinreichend vieleWerkstückträger-Markierungen 26 vorgesehen, so dass sichergestellt wird, dass bei jeder beliebigen Ausrichtung des Werkstückes 16 relativ zu der Verfolgungseinrichtung 4 diese zumindest vier Werkstückträger-Markierungen 26 erfassen kann. Die Werkstückträger-Markierungen 26 zu unterschiedlichen Werkstückträgern 14 sind kodiert und die entsprechende Kodierung zu unterschiedlichen Werkstückträgern 14 ist in einem Speicher des Prozessors 8 hinterlegt, so dass aufgrund der Erkennung des Musters der Werkstückträger-Markierungen 26 an einem bestimmten Werkstückträger 14 automatisiert auf die Beschaffenheit dieses Werkstückträgers 14 und des darauf gehaltenen Werkstückes 16 geschlossen werden kann. Hierdurch erfolgt die Auswahl der dem Werkstück zugeordneten Daten zur Werkstücktopografie, die ebenfalls in einem Speicher des Prozessors 8 hinterlegt sind. Diese Daten zur Werkstücktopografie wurden üblicherweise aus dem CAD-Programm zur Auslegung des Werkstückes 16 in den Speicher eingelesen.

Mit der Erkennung der Kodierung der Werkstückträger-Markierungen 26 werden die Daten zur Werkstücktopografie der Fahrzeugtür 16 aktiviert und in dem Prozessor 8 bereitgestellt. Durch die Lage der von der Verfolgungseinrichtung 4 zu erkennenden Werkstückträger-Markierungen 26 und mit den Daten zur Werkstücktopografie sowie einem ebenfalls hinterlegten Datensatz, der die Ausrichtung des Werkstücks 16 relativ zu dem Werkstückträger 14 beschreibt und Werkstücklagedaten enthält, wird ein erster Datensatz ermittelt, der die vermutete Lage des Werkstücks in einem absoluten Koordinatensystem beschreibt. Dieses absolute Koordinatensystem kann das Koordinatensystem Verfolgungseinrichtung 4 sein. Jedenfalls wird ein Roboterwelt-Koordinatensystem hinsichtlich des Koordinatensystems der Verfolgungseinrichtung 4 eingemessen. Dieses Einmessen erfolgt beispielsweise über das Einlesen der Lage der Messwertaufnehmer-Markierungen 22. Alternativ oder ergänzend können auch Markierungen an dem Roboterfuß, d.h. an dem ortsfesten Teil des Roboters 1 eingelesen werden. Parallel erfolgt das Einmessen des Koordinatensystems der Verfolgungseinrichtung 4 und eines Roboter-Flansch-Koordinatensystems, welches die Verfolgungseinrichtung 4 über die Messwertaufnehmer-Markierungen 22 erfasst.

Das Koordinatensystem der Verfolgungseinrichtung 4 wird über die Messwertaufnehmer-Markierungen 22 erfasst.

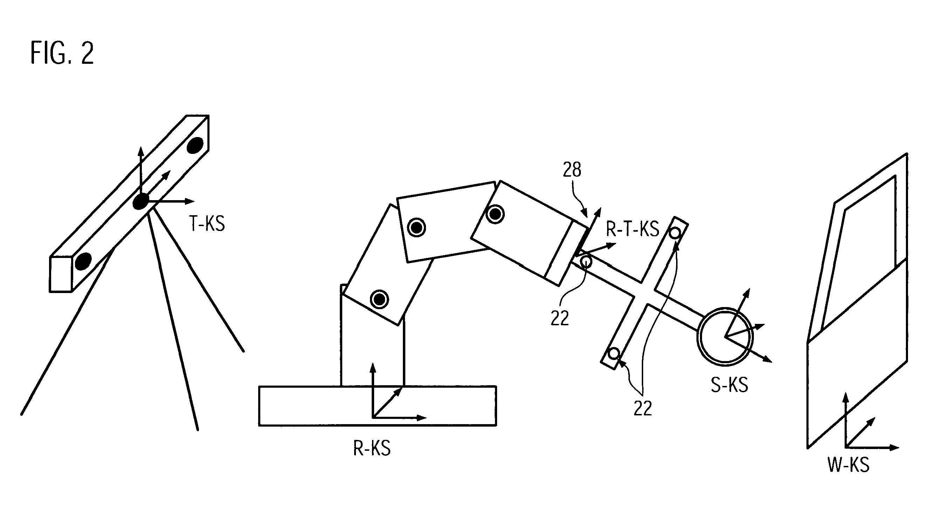

Das Koordinatensystem der Verfolgungseinrichtung 4 ist in Figur 2 mit T-KS gekennzeichnet. Das Koordinatensystem der Roboterwelt ist mit R-KS angedeutet. Das zuvor erwähnte Koordinatensystem am Roboter-Flansch ist dort mit Bezugszeichen R-F-KS gekennzeichnet. Schließlich ist ein Koordinatensystem S-KS für das Koordinatensystem der im wesentlichen kugelförmigen Tastspitze 20 in Figur 2 eingezeichnet. Schließlich ist mit W-KS das Koordinatensystem eines Werkstückes angegeben, in dem üblicherweise die Beschreibung der Werkstücktopografie aufgrund von hinterlegten CAD-Daten erfolgt.

Das zuvor beschriebene Einmessen des Roboterwelt-Koordinatensystems R-W-KS in das Koordinatensystem des optischen Trackers 4-T-KS und das Einmessen dieses Koordinatensystems T-KS in das Roboter-Flansch-Koordinatensystem R-F-KS erfolgt üblicherweise simultan durch Aufzeichnen mehrerer stationärer Stellungskonfigurationen des Roboterarms 18 und damit der Tastspitze 20, deren Lage und Orientierung sowohl durch den Roboter 2 als auch durch den optischen Tracker 4 ermittelt werden (aktuelle Information der Robotersteuerung zur tatsächlichen Lage des Roboterarms). Die Messung des Roboters 2 erfolgt dabei üblicherweise durch Auslesen von Steuerbefehlen, die repräsentativ für eine bestimmte Stellung des Roboters und damit der Tastspitze 20 und der zugeordneten Messwert-Markierungen 22 sind.

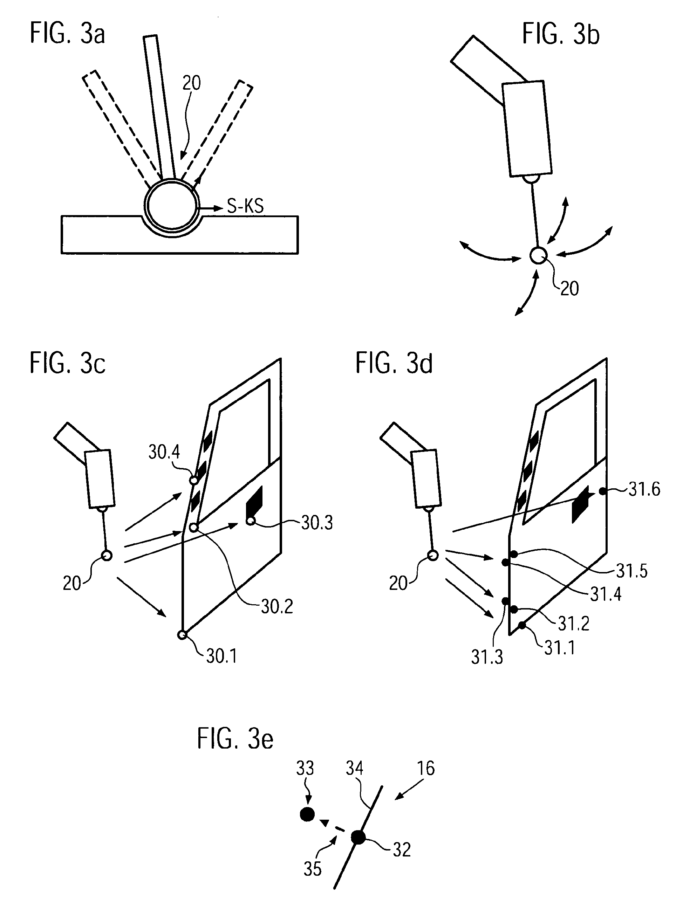

Üblicherweise wird nach dem Einmessen der jeweiligen Koordinatensysteme zur Kalibrierung des Roboters zunächst eine Gravitationskompensation bzw. eine Kalibrierung der Tastspitze 20 durchgeführt, die in den Figuren 3a und 3b angedeutet sind.

Bei der Kalibrierung der Tastspitze 20 wird diese zunächst in unterschiedlichen winkligen Anstellungen in einem vorbestimmten Punkt angeordnet. Hierzu wird mit einem Pivot-Algorithmus die Endlage des Koordinatenursprungs des Koordinatensystems S-KS konstant gehalten. Die in den Endlagen gegebenen Ausrichtungen der Messwert-Markierungen 22 werden erfasst, Am Ende dieser Kalibrierung liegt der Ursprung des Tastspitzen-Koordinatensystems S-KS auf dem Mittelpunkt der Kugel der Tastspitze 20.

Nach dieser Tastspitzenkalibrierung wird die in Figur 3b symbolisierte GravitationsKompensation berechnet. Ober die Robotersteuerung wird die Tastspitze 20 in verschiedene Richtungen verschwenkt, wobei gleichzeitig Messwerte des Kraft-Drehmoment-Sensors 28 aufgezeichnet werden. Aus diesen Daten wird die Lage des Schwerpunktes und das Gewicht des Messwerkzeugs ermittelt. Als Messwerkzeug ist dabei derjenige Teil der Vor richtung zu verstehen, der von dem Kraft-Drehmoment-Sensor 28 getragen wird. Teil des Werkzeuges ist insbesondere die Tastspitze 20 sowie die Messwertaufnehmer-Markierungen 22 sowie die zur Halterung derselben vorgesehenen und von der Achse abragenden Arme.

Figuren 3c und 3d verdeutlichen unterschiedliche Phasen der Werkstückkalibrierung. Bei dieser Werkstückkalibrierung wird die tatsächliche Lage des Werkstücks eingemessen.

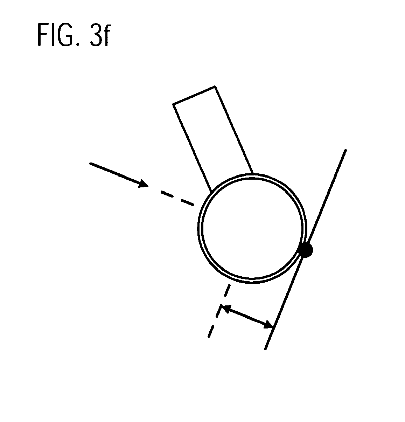

Zunächst werden ― wie Figur 3f verdeutlicht - einige optisch markante Punkte, die im folgenden als Referenzpunkte 30.1 bis 30.4 gekennzeichnet werden, von der Tastspitze 20 angefahren. Wie bereits zuvor beschrieben, erhält der Prozessor 8 durch die Daten zur Werkstücktopografie (CAD) die Werkstücklagedaten, die die relative Ausrichtung des Werkstücks 16 zu dem Werkstückträger 14 beschreiben, sowie den Werkstückträgerlagedaten, die durch Erfassen der Werkstückträger-Markierungen 26 über die Verfolgungseinrichtung 4 gewonnen werden, eine erste Aussage über die mutmaßliche tatsächliche Lage des Werkzeugs in einem absoluten Koordinatensystem, welches beispielsweise das Koordinatensystem T-KS der Verfolgungseinrichtung 4 sein kann. Mit diesen Informationen werden Referenzpunkt-Topografiekoordinaten zu jedem einzelnen Referenzpunkt 30.1 bis 30.4 ermittelt. Die Referenzpunkte 30.1 bis 30.4 werden jeweils von der Tastspitze 20 angefahren. Bei der Annäherung der Tastspitze 20 an die jeweiligen Referenzpunkte 30.1 bis 30.4 wird die tatsächliche Lage der Tastspitze 20 Ober die Messwertaufnehmer-Markierungen 22 überprüft. Bei einer Abweichung von dem optimalen Zuführweg der Tastspitze 20 zur lagegenauen Annäherung an den jeweiligen Referenzpunkt 30 werden Steuerungskorrekturdaten berechnet, die an die Robotersteuerung weitergeleitet werden. Die Überprüfung der Annäherungsbewegung erfolgt optisch über die Verfolgungseinrichtung 4. Die hier gewonnenen Erkenntnisse werden zur genauen Annäherung an den jeweiligen Referenzpunkt 30 weiterverarbeitet.

Bei Berührung jedes Referenzpunktes 30 wird zu diesem tatsächliche Referenzpunktortskoordinaten ermittelt. Durch Vergleich der zunächst berechneten und aus dem Speicher ausgelesenen ersten Soll-Referenzortskoordinate mit dieser tatsächlich gemessenen Referenzortskoordinaten wird die Abweichung zwischen Soll- und Ist-Koordinaten zu jedem Referenzpunkt festgestellt. Mit einem best-fit-Algorithmus werden die jeweiligen Abweichungen zu einzelnen Referenzpunkten 30 mathematisch ahgepasst. Aus dieser Anpassung wird ein Datensatz von lst-Topografiekoordinaten erzeugt, welcher die lst-Lage des Werkstücks 16 angibt.

Alternativ kann die Messspitze manuell an einen vorgegeben Referenzpunkt des Werkstücks 16 angenähert werden. Hierzu wird auf die Robotersteuerung Einfluss genommen, so dass die Bewegung des Roboterarms 18 Messsignalen folgt, die von dem Kraft-Drehmoment-Sensor 28 abgegeben werden. Der Benutzer fasst dementsprechend das Werkzeug händisch und führt dieses händisch zu dem jeweiligen Referenzpunkt 30 an dem Werkstück 16. Durch Quittieren beispielsweise über das lnterface 10 wird das Erreichen des Referenzpunktes 30 mitgeteilt. Dieses Signal wird weiterverarbeitet, um beispielsweise die Verfolgungseinrichtung 4 zu instruieren, die aktuelle Lage der Messwert-Markierungen 22 aufzunehmen und hierdurch optisch die Lage der Tastspitze 20 an dem zugeordneten Referenzpunkt 30 zu ermitteln und die so ermittelten Referenzpunkt-Messkoordinaten abzulegen. Diese Referenzpunkt-Messkoordinaten werden mit vorgegebenen Referenzpunkt-Top.ografiekoordinaten, die beispielsweise aus dem CAD-Datensatz zu dem Werkstück 16 ausgelesen sind, verglichen. Auch in diesem Fall erfolgt durch einen best-fit-Algorithmus zu den mehreren Referenzpunkten 30, die im Rahmen der zuvor vorgestellten haptischen Programmierung des Roboters 2 angefahren werden durch und zu den einzelnen Referenzpunkten 30 ermittelten Referenzpunkt-Messkoordinaten mit den Referenzpunkt-Topografiekoordinaten eine Ermittlung der Ist-Lage des Werkstücks 16.

Nach Beendigung der beiden alternativen Schritte sind jedenfalls erste lst-Topografiedaten in einem Speicher des Prozessors 8 hinterlegt. Ergibt eine Analyse des best-fit-Algorithmus zu hohe Abweichungen, so kann die Tastspitze 20 mehrfach aufgrund von berechneten Referenzpunktortskoordinaten angefahren werden, die aus den ersten lst-Topografiedaten ausgelesen worden sind.

Danach folgt die in Figur 3d skizzierte feine Justierung des Werkstücks 16. Bei dieser Feinlokalisierung des zu prüfenden Werkstücks 16 werden Referenzpunkte 31 definiert. Bei diesen Referenzpunkten 31 kann es sich um andere Referenzpunkte handeln als diejenigen handeln, die in dem ersten Schritt in Figur 3c mit Bezugszeichen 30 gekennzeichnet sind. Sowohl die Referenzpunkte 31 selber als auch die Anzahl der bei der Feinlokalisierung angefahrenen Referenzpunkte kann gegenüber dem ersten Schritt variieren. Es ist zu bevorzugen, sechs Referenzpunkte 31 zu definieren und diese jeweils mit der Tastspitze 20 anzufahren. Diese weiteren Referenzpunkte 31 werden aus den ersten bzw. nach einem oder mehreren lterationsschritten letzten lst-Topografiedaten ausgelesen und für die Robotersteuerung aufbereitet. Beim Anfahren der jeweiligen Referenzpunkte 31 wird die Lage der Tastspitze 20 über die Verfolgungseinrichtung 4 kontinuierlich überprüft, gegebenenfalls durch Erzeugen und Überschreiben der Steuerungsdaten für die Robotersteuerung eine lagegenaue Annäherung an den Referenzpunkt 31 sichergestellt. Die hierbei gewonnene lst-Referenz-Messkoordinaten werden wiederum in einem best-fit-Algorithmus mit den lst-Referenzpunktkoordinaten verglichen, die aus den ersten bzw. letzten lst-Tapografiedaten isoliert wurden. Im Rahmen des best-fit-Algorithmus wird eine korrigierte lst-Lage des Werkstückes 16 berechnet. Diese Ist-Lage des Werkstückes 16 kennzeichnende korrigierte Topografiedaten werden abgespeichert. Auch diese Feinlokalisierung des Werkstückes 16 kann iterativ vorgenommen werden, um das Maß der Abweichungen zwischen den hinterlegten Werten und den tatsächlich gemessenen Werten zu verringern. Ziel ist immer eine bestmögliche Anpassung der durch die Daten zur Werkstücktopografie definierten virtuellen Realität, die üblicherweise durch die CAD-Daten gewonnen wird, mit der tatsächlichen Realität, die an den Referenzpunkten 31 durch die Tastspitze 20 und über die Verfolgungseinrichtung 4 ermittelt wird. Sollte die virtuelle Realität nicht anhand von Daten zur Werkstücktopografie eingespeichert worden sein, die aus dem CAD gewonnen sind, können solche Daten auch an einem vollkommen fehlerfreien Musterteil ermittelt werden. Dazu werden vorgegebene Referenzpunkte an dem Musterteil angesteuert. Das Musterteil sollte auch exakt ausgerichtete optische Markierungen umfassen, um die Lage des Musterteils exakt Ober die Verfolgungseinrichtung 4 eingeben zu können.

Zum Aufnehmen eines Messpunktes, der in Figur 3e mit Bezugszeichen 32 gekennzeichnet ist, wird die Tastspitze 20 üblicherweise mit ihren kugelförmigen Enden in eine Startposition 33 verbracht, die mit vorbestimmten Abstand, beispielsweise mit einem Abstand von zwischen 1 und 6 mm, vorzugsweise von zwischen 2 und 3,4 mm, zu einer Oberfläche 34 des Werkstücks 16 vorgesehen ist. Die Tastspitze 20 wird dabei mit relativ hoher Geschwindigkeit bis zu der Startposition 33 verbracht. Der vorbestimmte Abstand zwischen der Startposition und dem Messpunkt 32 wird berechnet über einen Normalenvektor 35, der rechtwinklig von der Oberfläche 34 des Werkstücks 16 abgeht. Dieser Normalenvektor 35 an dem Messpunkt 32 kann aus den Daten zur Werkstücktopografie (CAD) berechnet werden. Während das Verfahren in die Startposition 33 allein über die Robotersteuerung und hinterlegte Koordinaten der Robotersteuerung erfolgen kann, erfolgt die Annäherung zwischen der Startposition 33 und dem Messpunkt 32 bei Überwachung des Verfahrweges der Tastspitze 20 über die Verfolgungseinrichtung 4. Dementsprechend wird die Position der Tastspitze und damit des freien Endes des Roboterarmes 18 optisch erfasst und über den Tracker 4 korrigiert. Die Rechenoperation zu dieser Lage- bzw. Bewegungskorrektur erfolgt in dem Prozessor 8.

Bei Erreichen des Messpunktes 33 (vgl. Figur 3f) gibt der sechsdimensionale Kraft-Drehmoment-Sensor 28 ein entsprechendes Signal aus. Sobald dieses Signal von dem Prozessor 8 empfangen wird, wird die von dem Tracker 4 erfasste Position der Messwertaufnehmer-Markierungen 22 optisch erfasst. Hieraus wird die Lage des Endes des Roboter-Flansches in dem zugeordneten Koordinatensystem R-F-KS ermittelt. Die zuvor durchgeführte Tastspitzenkalibrierung (vgl. Figur 3a) erlaubt des weiteren die exakte Bestimmung der Koordinaten des Messpunktes 32. Die von der Verfolgungseinrichtung 4 ermittelten Koordinaten werden in Gegenrichtung des Normalenvektors 35 um den Radius der Messkugel korrigiert und abgespeichert.

Das Erreichen des Messpunktes 32 kann auch über einen Messtaster erfolgen, der mit einem Schalter versehen ist, welcher bei Anlage der Tastspitze 20 gegen einen unverrückbaren Widerstand auslöst. Eine besonders akkurate Messung lässt sich indes mit dem 6D-Kraft-Moment-Sensor 28 verwirklichen.

Dieser Sensor 28 ermöglicht des weiteren einen Kollisionsschutz, wenn beim Verfahren des Roboters 2, auch beim Verfahren in die Startposition 33 die Messsignale des Sensors 28 zu jeder Zeit erfasst werden und ein Überschreiten eines Grenzwertes als Kollisionsereignis gewertet wird. Bei einem solchen Kollisionsereignis stoppt die Robotersteuerung die Bewegung des Roboterarms 18.

Die erfindungsgemäße Vorrichtung weist den Vorteil auf, dass die Position der Tastspitze 20 über die Erkennung der Messwertaufnehmer-Markierungen 22 am Ende des Roboterarmes 18 durch die Verfolgungseinrichtung 4 ständig überwacht werden kann, Ungenauigkeiten in der Robotersteuerung bei Annäherung an einen Mess- bzw. Referenzpunkt haben daher keinen Einfluss auf die Genauigkeit des Messergebnisses. Die Vorrichtung lässt sich relativ kostengünstig herstellen, da sie aus einem lndustrieroboter besteht und einer relativ einfach gehaltenen optischen Vorrichtung, die die Bewegung des Roboterarmes 18 erfolgt und erfasst. Die Vorrichtung lässt sich relativ einfach erstellen und für exakte Messungen einrichten. Insbesondere bei der Verwendung eines Sechs-Achs-Knickarmroboters können taktile Messungen mit einer Messspitze an nahezu jeder beliebigen Stelle des Werkstücks durchgeführt werden. Im Gegensatz zu Koordinatenmessmaschinen kann die Tastspitze 20 freiformartig an die Oberfläche des Werkstücks 16 herangeführt werden. Durch die optische Überwachung des Werkzeugträgers 14 bzw. des Werkstücks 16 und des Messwertaufnehmers 20 können einzelnen Komponenten der Vorrichtung, wie beispielsweise der Drehtisch 24 und damit die Probe, die Verfolgungseinrichtung 4 oder eventuell auch der Roboter 2 bewegt werden, ohne dass Einbußen in der Messgenauigkeit zu befürchten sind. Die Lage der einzelnen Komponenten wird jeweils über optische Marker erfasst, die eine leichte Einnässung bzw. Kalibrierung der einzelnen Komponenten ermöglicht.

### Bezugszeichenliste

- 2: Roboter
- 4: Verfolgungseinrichtung / Tracker
- 6: Ständer
- 8: Prozessor
- 10: Interface
- 12: Bildschirm
- 14: Werkstückträger
- 16: Werkstück
- 18: Roboterarm
- 20: Tastspitze
- 22: Messwertaufnehmer-Markierungen
- 24: Drehtisch
- 26: Werkstückträger-Markierungen
- 28: Kraft-Drehmoment-Sensor
- 30: erster Referenzpunkt
- 31: zweiter Referenzpunkt
- 32: Messpunkt
- 33: Startposition
- 34: Oberfläche des Werkstücks 16
- 35: Normale

## Patentansprüche

1. Verfahren zum Vermessen von Werkstücken, bei dem ein an einem Roboterarm (18) angeordneter Messwertaufnehmer (20) aufgrund von Steuerbefehlen einer Robotersteuerung an einen Referenzpunkt (30, 31, 32) angenähert wird und durch Erfassen von dem Messwertaufnehmer (20) zugeordneten optischen Messwertaufnehmer-Markierungen (22) durch eine optische Verfolgungseinrichtung (4) die Position des Messwertaufnehmers (20) erkannt und die so ermittelte lst-Position des Messwertaufnehmers (20) mit hinterlegten Soll-Referenzpunktkoordinaten zu dem Referenzpunkt (30, 31) verglichen werden und daraus in einem Prozessor (8) Annäherungskorrekturdaten ermittelt werden, aufgrund derer Steuerungskorrekturdaten berechnet und an die Robotersteuerung zur lagegenauen Annäherung des Messwertaufnehmers (20) an den Referenzpunkt (30, 31) weitergeleitet werden.

2. Verfahren nach Anspruch 1, **dadurch gekennzeichnet, dass das** Erreichen des Referenzpunktes (30, 31, 32) über einen Messwert eines endseitig an dem Roboterarm (18) vorgesehenen und eine Tastspitze (30) tragenden Kraft-Drehmoment-Sensor (28) erkannt wird und dass bei Erreichen des Referenzpunktes (30, 31, 32) die Annäherungsbewegung des Roboterarmes (18) gestoppt wird.

3. Verfahren nach Anspruch 1 oder 2, **dadurch gekennzeichnet, dass** bei Erreichen des Referenzpunktes (30, 31, 32) über die Verfolgungseinrichtung (4) Referenzpunkt-Messkoordinaten ermittelt und abgespeichert wird.

4. Verfahren nach einem der vorherigen Ansprüche, **dadurch gekennzeichnet, dass** zu dem Werkstück (16) Daten zur Werkstücktopographie hinterlegt werden, die zu dem Referenzpunkt (30, 31, 32) Referenzpunkt-Topographiekoordinaten enthalten, dass das Werkstück (16) an vorbestimmten und in den Daten zur Werkstücktopographie **gekennzeichnet**en Stellen mit optischen Werkstückmarkierungen versehen wird und dass die Verfolgungseinrichtung (4) aufgrund der optischen Werkstückmarkierungen die Lage des Werkstücks (16) erkennt und mit so ermittelten Werkstücklagedaten und den Referenzpunkt-Topographie-Koordinaten erste Soll-Referenzpunkt-Ortskoordinaten ermittelt werden.

5. Verfahren nach einem der vorherigen Ansprüche, **dadurch gekennzeichnet, dass** zu dem Werkstück (16) Daten zur Werkstücktopographie hinterlegt werden, die zu dem Referenzpunkt (30, 31, 32) Referenzpunkt-Topographiekoordinaten enthalten, dass das Werkstück (16) durch einen Werkstückträger (14) in vorbestimmter Lage gehalten wird, dass die Ausrichtung des Werkstücks (16) relativ zu dem Werkstückträger (14) beschreibende Werkstücklagedaten hinerlegt werden und dass die Verfolgungseinrichtung (4) aufgrund von optischen Werkstückträger-Markierungen (26) an dem Werkstückträger (14) die Lage des Werkstückträgers (14) erkennt und mit so ermittelten Werkstückträgerlagedaten, den Werkstücklagedaten und den Referenzpunkt-Topographie-Koordinaten erste Soll-Referenzpunkt-Ortskoordinaten ermittelt werden.

6. Verfahren nach Anspruch 4 oder 5, **dadurch gekennzeichnet, dass** verschiedene Werkstücke durch die optischen Werkstückmarkierungen und/oder Werkstückträger (14) zu verschiedenen Werkstücken (16) durch die optischen Werkstückträger-Markierungen (26) kodiert sind und dass die Verfolgungseinrichtung (4) aufgrund der optischen Werkstückmarkierungen Art des Werkstücks (14) erkennt bzw. aufgrund der Werkstückträger-Markierungen (26) die Art des Werkstückträgers (14) erkennt und aufgrund dieser Erkennung die an dem Werkstückträger (14) und dem daran gehaltenen Werkstück (16) zugeordneten Werkstücklagedaten und Referenzpunkt-Topographiekoordinaten aus einer Datenbank ausgelesen und zur Ermittlung der ersten Soll-Referenzpunkt-Ortskoordinaten verarbeitet werden.

7. Verfahren nach einem der vorherigen Ansprüche, **dadurch gekennzeichnet, dass** mit der Tastspitze (20) verschiedene Referenzpunkte (30, 31) angefahren werden und dass durch Vergleich der so ermittelten Referenzpunkt-Messkoordinaten zu jedem Referenzpunkt (30, 31) mit den ersten Soll-Referenzpunkt-Ortskoordinaten zu jedem Referenzpunkt (30, 31) tatsächliche Referenzpunkt-Ortskoordinaten ermittelt werden und dass durch Vergleich der tatsächlichen Referenzpunkt-Ortskoordinaten mit den ersten Soll-Referenzpunkt-Ortskoordinaten eine lst-Lage des Werkstückes (16) berechnet wird und diese kennzeichnende erste lst-Topographiedaten abgespeichert werden.

8. Verfahren nach einem der vorherigen Ansprüche, **dadurch gekennzeichnet, dass** ein erster Satz von Referenzpunkt-Messkoordinaten bei Berührung des Referenzpunktes (30, 31) nach manuell geführter Annäherung der Tastspitze (20) bei Bewegungssteuerung des Roboterarmes (18) aufgrund von Messsignalen des Kraft-Drehmoment-Sensors (28) erzeugt wird und dass durch Vergleich der so ermittelten Referenzpunkt-Messkoordinaten mit den Referenzpunkt-Topographiekoordinaten eine lst-Lage des Werkstückes (16) berechnet wird und diese kennzeichnende erste Ist-Topographiedaten abgespeichert werden.

9. Verfahren nach einem der vorherigen Ansprüche, **dadurch gekennzeichnet, dass** Ist-Referenzpunkt-Koordinaten zu verschiedenen Referenzpunkten aus den ersten Ist-Topographiedaten berechnet werden, dass die so berechneten Ist-ReferenzpunktKoordinaten zu den verschiedenen Referenzpunkten mit der Tastspitze (20) angefahren werden und dass durch Vergleich der hierbei gewonnenen lst-Referenzpunkt-Messkoordinaten zu jedem Referenzpunkt (30, 31) mit dem berechneten ersten lst-Topographiedaten eine korrigierte lst-Läge des Werkstückes (16) berechnet und diese kennzeichnende korrigierte Topographiedaten abgespeichert werden.

10. Verfahren nach einem der vorherigen Ansprüche, **dadurch gekennzeichnet, dass** aus den ersten lst-Topographiedaten bzw. den korrigierten Topographiedaten die Soll-Ortskoordinaten eines anzufahrenden Messpunktes (32) ermittelt und dieser Messpunkt (32) zur Ermittlung der lst-Messpunkt-Ortskoordinaten angefahren wird.

11. Verfahren nach einem der vorherigen Ansprüche, **dadurch gekennzeichnet, dass** zum Anfahren eines Mess- bzw. Referenzpunktes (30, 31, 32) aufgrund von hinterlegten Ortskoordinaten zu dem Mess- bzw. Referenzpunkt (30, 31, 32) eine Startposition (33) für den Messwertfühler (20) berechnet wird, die einen vorbestimmten Abstand in Normalenrichtungen bezogen auf die Oberfläche (34) des Mess- bzw. Referenzpunktes (30, 31, 32) hat, dass der Messwertfühler (20) mit einer ersten Geschwindigkeit in die Startposition (33) verbracht und mit einer zweiten Geschwindigkeit an den Mess- bzw. Referenzpunkt (30, 31, 32) angenähert wird und dass die erste Geschwindigkeit höher als die zweite Geschwindigkeit ist.

12. Verfahren nach einem der vorherigen Ansprüche, **dadurch gekennzeichnet, dass** die Verfolgungseinrichtung (4) durch Überwachen der Lage der optischen Werkstückträger-Markierungen (26) und/oder der optischen Werkstückmarkierungen Bewegungen des Werkstückträgers (26) und/oder des Werkstücks erkennt und hieraus in dem Prozessor Annäherungskorrekturdaten ermittelt werden, aufgrund derer Steuerungskorrekturdaten berechnet und an die Robotersteuerung zur lagegenauen Annäherung an den Referenzpunkt (30, 31) weitergeleitet werden.

13. Vorrichtung zur Vermessung von Werkstücken (16) mit einem Roboter (2), an dessen Roboterarm (18) ein Messwertaufnehmer (20) sowie mehrere optische Messwertaufnehmer-Markierungen (22) angeordnet sind;
eine Robotersteuerung (8) zur Betätigung des Roboterarms (18);
eine optische Vertolgungseinrichtung (4), die die optischen Messwertaufnehmer-Markierungen (22) erkennt, und
einen Prozessor (8) mit einem Speicher, in dem Lagekoordinaten zu Referenz- bzw. Messpunkten (30, 31, 32) zu dem Werkstück (16) sowie Topographiedaten zur Soll-Topographie des Werkstückes (16) hinterlegbar sind und der mit der Robotersteuerung (8) und der Verfolgungseinrichtung (4) zusammenwirkt.

14. Vorrichtung nach Anspruch 12, **dadurch gekennzeichnet, dass** endseitig an dem Roboterarm (18) ein eine Tastspitze (20) tragender Kraft-Drehmoment-Sensor (28) vorgesehen ist, der mit dem Prozessor (8) zusammenwirkt.

15. Vorrichtung nach Anspruch 12 oder 13, **dadurch gekennzeichnet, dass** ein endseitig an dem Roboterarm (18) ein Scanner vorgesehen ist, der mit dem Prozessor (8) zusammenwirkt.
